**Europäisches Patentamt**

**European Patent Office**

**Office européen des brevets**

(19)

(11) Veröffentlichungsnummer: **0 152 526**
**B1**

# (12) EUROPÄISCHE PATENTSCHRIFT

(45) Veröffentlichungstag der Patentschrift:
**10.12.86**

(21) Anmeldenummer: **84111139.6**

(22) Anmeldetag: **19.09.84**

(51) Int. Cl.⁴: **F 16 K 7/12**

(54) **Ventileinrichtung.**

(30) Priorität: **13.10.83 DE 3337233**

(43) Veröffentlichungstag der Anmeldung:
**28.08.85 Patentblatt 85/35**

(45) Bekanntmachung des Hinweises auf die Patenterteilung:
**10.12.86 Patentblatt 86/50**

(84) Benannte Vertragsstaaten:
**AT CH DE FR GB IT LI NL SE**

(56) Entgegenhaltungen:
**US - A - 2 677 390**
**US - A - 3 019 815**
**US - A - 3 633 605**
**US - A - 4 006 753**
**US - A - 4 304 257**

(73) Patentinhaber: **WABCO Westinghouse
Steuerungstechnik GmbH & Co.,
Bartweg 13 Postfach 91 12·70, D-3000 Hannover 91 (DE)**

(72) Erfinder: **Kedzierski, Heinrich, Dr., Am Wehr 9,
D-3015 Wennigsen (DE)**

(74) Vertreter: **Schrödter, Manfred, WABCO Westinghouse
Fahrzeugbremsen GmbH Am Lindener
Hafen 21 Postfach 91 12 80, D-3000 Hannover 91 (DE)**

## Beschreibung

Die Erfindung betrifft eine Ventileinrichtung mit einem Ventil, das von einem Ventilkörper und einem Ventilsitz gebildet ist, gemäss dem Oberbegriff des Patentanspruchs 1.

Ventileinrichtungen dieser Art werden üblicherweise als Sitzventile, insbesondere als Membranventile, z.B. in Druckluft-Steueranlagen verwendet, um Steuerdrücke oder Arbeitsdrücke für vorgesteuerte Ventile zu steuern US-A-2677390. Bei geöffnetem Ventil ist dabei der Ventilkörper ganz von dem üblicherweise ringförmigen Ventilsitz abgehoben. Die Verwendung von ringförmigen Ventilsitzen führt dazu, dass sich bei Mehrwegeventilen mit mehreren nebeneinander angeordneten Ventilen ein vergleichsweise grosser Platzbedarf ergibt.

Ferner entsteht dabei die Notwendigkeit, die Druckluft mehrfach umzulenken. Von Nachteil ist dabei ferner, dass die Betätigungskraft für den Ventilkörper den statischen Druck der zu steuernden Druckluft überwinden muss.

Der Erfindung liegt deshalb die Aufgabe zugrunde, eine Ventileinrichtung der eingangs genannten Art zu schaffen, die auf einfache Weise eine platzsparende Konstruktion, insbesondere für Mehrwegeventile erlaubt und die nur vergleichsweise geringe Betätigungskräfte erfordert.

Diese Aufgabe wird durch die im Patentanspruch 1 angegebene Erfindung gelöst. Weiterbildungen und vorteilhafte Ausführungsbeispiele der Erfindung sind in den Unteransprüchen angegeben.

Die Erfindung weist den Vorteil auf, dass bei Mehrwegeventilen die zu verbindenden Druckmittelkammern unmittelbar nebeneinander angeordnet werden können und dass die jeweils zwischen zwei Druckmittelkammern angeordneten Sitzventile nur eine einmalige Umlenkung des Druckmittels erfordern. Auch bei der Verwendung der erfindungsgemässen Ventileinrichtung als 2/2-Wegeventil ergibt sich eine einfache Konstruktion, die mit geringen Betätigungskräften das Steuern relativ grosser Strömungsquerschnitte erlaubt. Da die erfindungsgemässe Ventileinrichtung gewissermassen die Kontur eines menschlichen Mundes annimmt und praktisch nach Art eines Schieberventils wirkt, wird der Ventilkörper im geschlossenen Zustand des Ventils nicht vom statischen Druck des abzusperrenden Druckmittels beaufschlagt. Bei einer vergleichsweise grossen Länge des Ventilkörpers gegenüber der Höhe des Ventilkörperhubes ist die an sich erforderliche Längendehnung des Ventilkörpers nur sehr gering. Das Material des Ventilkörpers wird also nur sehr gering beansprucht.

Die Erfindung wird an Hand eines Ausführungsbeispiels, das in der Zeichnung dargestellt ist, näher erläutert. Es zeigen:

Fig. 1 ein Ausführungsbeispiel der Erfindung und

Fig. 2 bis Fig. 5 verschiedene Schnitte durch das Ausführungsbeispiel nach Fig. 1.

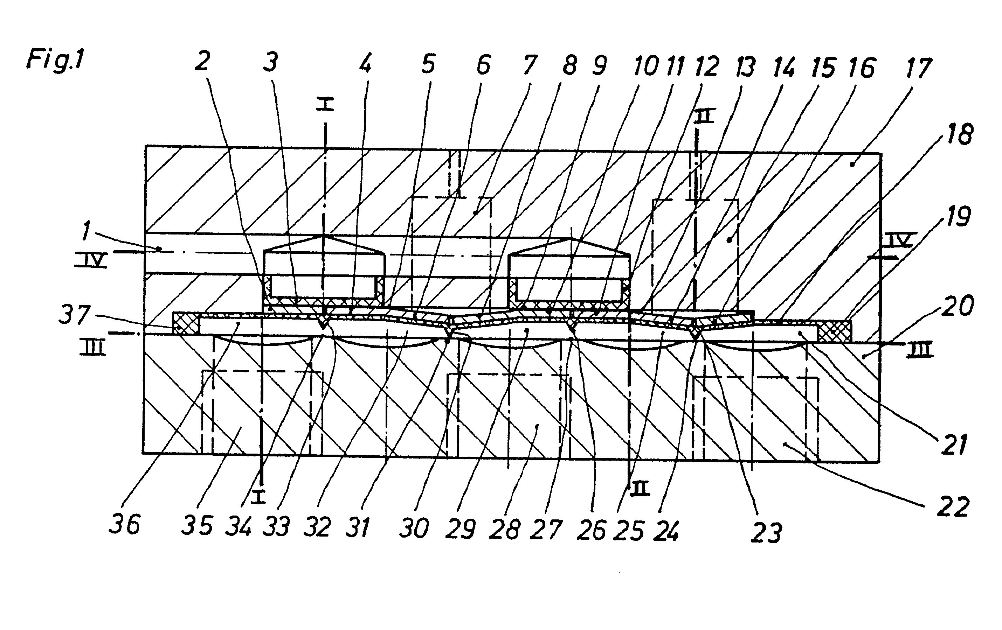

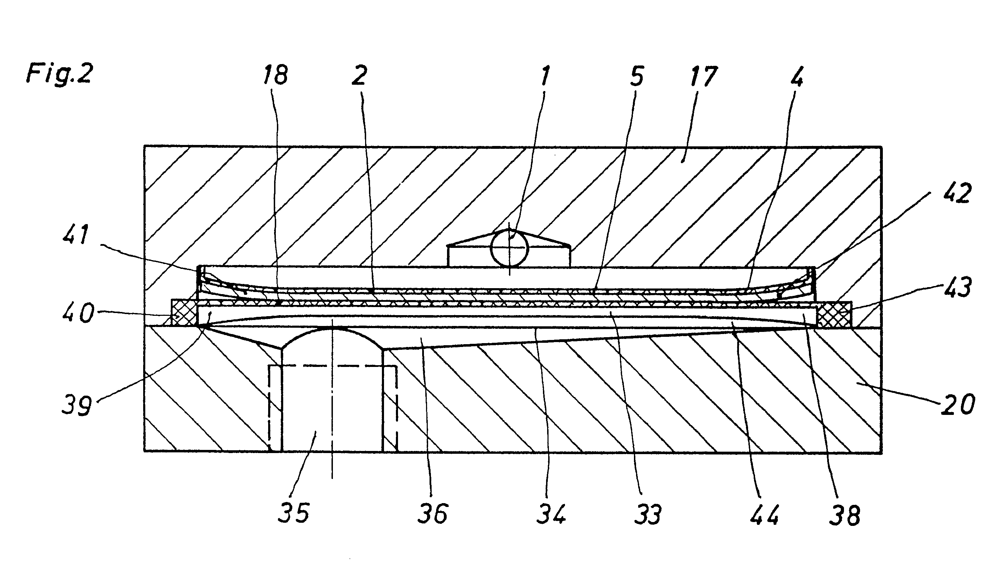

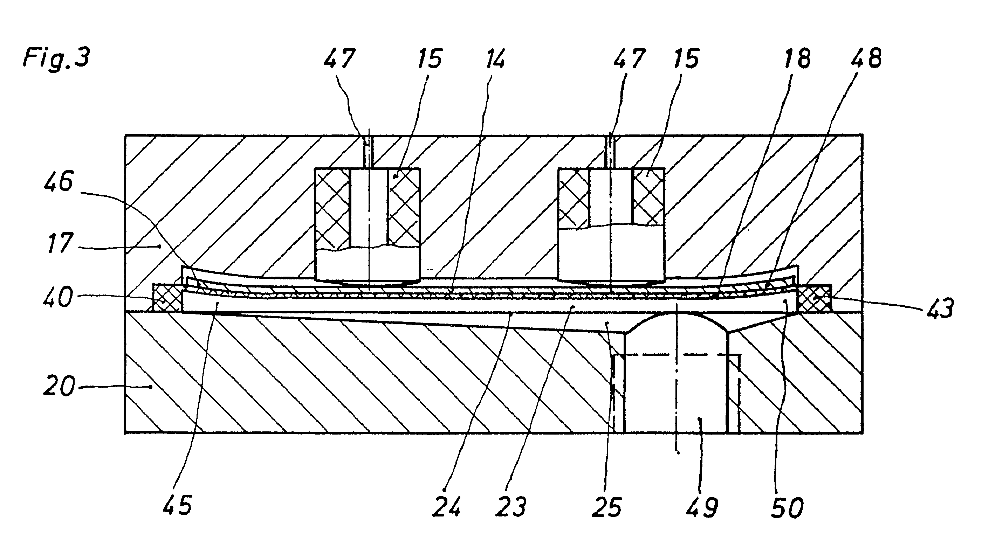

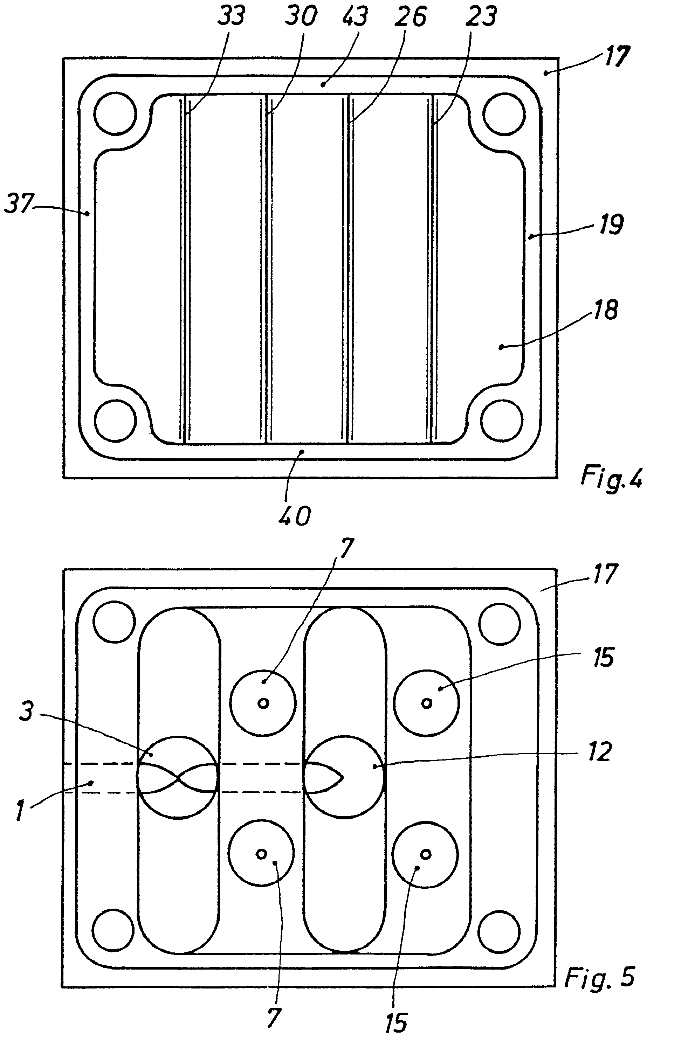

Die Zeichnung zeigt in Fig. 1 ein 5/2-Wegeventil für Druckluft. Die nachstehende Erläuterung dieses Wegeventils nimmt nicht nur auf die Fig. 1, sondern auch auf die Figuren 2 bis 5 Bezug. Die Fig. 2 zeigt einen Schnitt I-I des in Fig. 1 dargestellten Wegeventils, während Fig. 3 einen Schnitt II-II des erwähnten Wegeventils zeigt. In Fig. 4 ist ein Schnitt III-III und in Fig. 5 ist ein Schnitt durch die Ebene IV dargestellt.

Das Wegeventil weist einen Anschluss 28 für die zugeführte Druckluft auf, der mit einer Druckluft-Eingangskammer 29 verbunden ist. Die Eingangskammer 29 ist wahlweise mit zwei Ausgangskammern 25 und 32 verbindbar. Die Ausgangskammern 25 und 32 ihrerseits sind jeweils wahlweise mit der Eingangskammer 29 oder mit einer von zwei Entlüftungskammern 21 und 36 verbindbar. Diesen Entlüftungskammern 21 und 36 sind die Anschlüsse 22 und 35 zugeordnet. Von den den Ausgangskammern 25 und 32 zugeordneten Anschlüssen ist in Fig. 3 lediglich der der Ausgangskammer 25 zugeordnete Anschluss 49 dargestellt.

Die Verbindungen zwischen den erwähnten Druckluftkammern werden von Sitzventilen gebildet. Ein aus einem langgestreckten, geradlinig verlaufenden Ventilsitz 34 und einem langgestreckten Ventilkörper 33 gebildetes Sitzventil 33, 34 ist zwischen der Ausgangskammer 32 und der Entlüftungskammer 36 angeordnet. Der Ventilsitz 34 und der Ventilkörper 33 weisen eine endliche Länge auf, und zwar dadurch, dass sie jeweils von zwei Endbereichen begrenzt sind. Ein aus einem Ventilsitz 31 und einem Ventilkörper 30 gebildetes Sitzventil 30, 31 gleicher Art ist zwischen der Eingangskammer 29 und der Ausgangskammer 32 angeordnet. Schliesslich ist zwischen der Eingangskammer 29 und der Ausgangskammer 25 ein aus einem Ventilsitz 27 und einem Ventilkörper 26 bestehendes Sitzventil 26, 27 und zwischen der Ausgangskammer 25 und der Entlüftungskammer 21 ein aus einem Ventilsitz 24 und einem Ventilkörper 23 gebildetes Sitzventil 23, 24 angeordnet.

Die erwähnten Ventilkörper 23, 26, 30 und 33 bestehen je aus einem flexiblen Werkstoff, insbesondere aus Gummi, und sind Teile einer durchgehenden Membran 18, die mit ihren beiden Rändern 19 und 37 abgedichtet zwischen zwei Gehäusehälften 17 und 20 eingespannt ist.

Im dargestellten Zustand des Wegeventils ist das Sitzventil 33, 34 geöffnet und das Sitzventil 30, 31 geschlossen, so dass die Ausgangskammer 32 von der Eingangskammer 29 abgesperrt ist und über die Entlüftungskammer 36 entlüftet ist. Weiter ist das Sitzventil 26, 27 geöffnet und das Sitzventil 23, 24 geschlossen, so dass die Ausgangskammer 25 mit der Eingangskammer 29 verbunden ist. Damit strömt die der Eingangskammer 29 zugeführte Druckluft in die Ausgangskammer 25.

Um das Wegeventil aus dem dargestellten Zustand heraus umzuschalten, um also die Ausgangskammer 25 von der Eingangskammer 29 abzusperren und über die Entlüftungskammer 21 zu entlüften und die Ausgangskammer 32 mit der Eingangskammer 29 zu verbinden, ist es erforderlich, die Sitzventile 33, 34 und 26, 27 zu schliessen und die Sitzventile 30, 31 und 23, 24 zu öffnen. Zu diesem Zweck sind drei als Betätigungsmittel ausgebildete Antriebsteile 4, 6 und 8, 10 und 11, 14 vorgesehen. Diese je aus zwei plattenförmigen Teilen nach Art einer V-förmigen Wippe ausgebildeten Antriebsteile überdecken die Membran 18 sinngemäss über den Kammern 32, 29 und 25.

Die Wippe 4, 6 liegt mit ihrer Wippkante 5 an der oberen Gehäusehälfte 17 an. Im dargestellten Zustand des Wegeventils befindet sich die rechte Hälfte der Wippe 4, 6 unten. Dies bedeutet, dass der Ventilkörper 30 von der rechten Hälfte 6 der Wippe 4, 6 nach unten auf den Ventilsitz 31 gedrückt wird. Die linke Hälfte 4 der Rippe 4, 6 befindet sich entsprechend in der oberen Endlage.

Entsprechend unterstützt die linke Hälfte 8 der die Eingangskammer 29 überdeckenden und sich mit ihrer Wippkante 9 an der Gehäusehälfte 17 abstützenden Wippe 8, 10 den Schliessdruck auf den Ventilkörper 30, während die rechte Hälfte 10 der Wippe 8, 10 den Ventilkörper 26 freigibt, so dass das Sitzventil 26, 27 geöffnet sein kann. Das Sitzventil 26, 27 wird entsprechend auch von der linken Hälfte 11 der dritten mit ihrer Wippkante 13 an der oberen Gehäusehälfte 17 sich abstützenden Wippe 11, 14 freigegeben, während die rechte Hälfte 6 der Wippe 4, 6 sowie die linke Hälfte 8 der Wippe 8, 10 den Ventilkörper 30 freigeben, der dann unter dem Druck der Druckluft in der Eingangskammer 29 von dem Ventilsitz 31 abhebt. Zugleich werden entsprechend durch das Kippen der Wippen 8, 10 und 11, 14 das Sitzventil 26, 27 geschlossen und das Sitzventil 23, 24 geöffnet. Damit ist dann das dargestellte Wegeventil in die andere Stellung umgeschaltet.

Die in Fig. 1 dargestellte Position der Wippen 4, 6 und 8, 10 und 11, 14 wird dadurch zwangsweise eingehalten, dass federnde Stössel 7 und 15 vorgesehen sind. Zwei Stössel 7 liegen über der rechten Hälfte 6 der Wippe 4, 6 und über der linken Hälfte 8 der Wippe 8, 10, während zwei Stössel 15 über der linken Hälfte 11 der Wippe 11, 14 und einem Ausgleichsblech 16 liegen. Die federnden Stössel 7 und 15 beaufschlagen die erwähnten Hälften der Wippen 4, 6 und 8, 10 und 11, 14 mit einer zum Schliessen der Sitzventile 30, 31 und 23, 24 ausreichenden Kraft. Wenn also die nicht von den Stösseln 7 und 15 beaufschlagten Hälften der Wippen 4, 6 und 8, 10 und 11, 14 nicht von einer nennenswerten Kraft beaufschlagt werden, ergibt sich zwangsweise der in Fig. 1 dargestellte Betriebszustand.

Um die erwähnten Wippen 4, 6 und 8, 10 und 11, 14 in der beschriebenen Weise hin- und herkippen zu können, sind zwei als pneumatisch betätigbare Kolben ausgebildete Betätigungsstössel 3 und 12 vorgesehen, die je in einer senkrechten Bohrung der Gehäusehälfte 17 angeordnet sind und über eine Bohrung 1 mit Druckluft beaufschlagbar sind. Der Kolben 3 liegt über einem Ausgleichsblech 2 und der linken Hälfte 4 der Wippe 4, 6. Der Kolben 12 liegt über der rechten Hälfte 10 der Wippe 8, 10 und der linken Hälfte 11 der Wippe 11, 14.

Bei einer Beaufschlagung der Kolben 3 und 12 mit Druckluft werden diese aus der dargestellten Position heraus nach unten bewegt. Dies führt dann zu einem Umkippen der Wippen 4, 6 und 8, 10 und 11, 14 da die von den Kolben 3 und 12 aufgebrachte Kraft entsprechend grösser gewählt ist als die von den Stösseln 7 und 15 aufgebrachten Kräfte.

Die Ausgleichsbleche 2 und 16 haben die Aufgabe, eine gewisse Symmetrie für eine gleichmässige Auflage des Kolbens 3 sowie der Stössel 15 zu schaffen. Zum Umschalten der Wippventile dienen sie nicht.

Es ist erkennbar, dass die Ventilkörper 23, 26, 30 und 33 zum Schliessen der entsprechenden Sitzventile jeweils nur mit einer vergleichsweise geringen Kraft beaufschlagt werden müssen. Der von der zu schaltenden Druckluft aufgebrachte statische Druck wird von den Wippen 4, 6 und 8, 10 und 11, 14 insofern aufgenommen, als bei einer Schliessbewegung eine Hälfte einer Wippe gegen den statischen Druck der Druckluft nach unten bewegt werden muss, während die andere Hälfte der Wippe jeweils unter dem Einfluss des statischen Druckes nach oben bewegt wird. Die Ventilkörper 23, 26, 30 und 33 müssen also beim Schliessen der entsprechenden Sitzventile lediglich sinngemäss den dynamischen Druck der jeweils abzusperrenden Druckluft überwinden. Im Ergebnis bedeutet dies, dass die Kräfte zum Umschalten des beschriebenen Wegeventils mit Sitzventilen ähnlich gering sind wie bei einem Wegeventil mit Schieberventilen. Je schmaler die Berührungsfläche zwischen den Ventilsitzen und den Ventilkörpern ist, umso geringer sind die vom Ventilkörper aufzubringenden Schliesskräfte.

Die Wippen 4, 6 und 8, 10 und 11, 14 erstrecken sich in Fig. 1 senkrecht zur Zeichenebene über die ganze Länge der Ventilkörper 23, 26, 30 und 33 und der zugeordneten Ventilsitze 24, 27, 31 und 34. Eine genaue Darstellung dieser Anordnung ist der Fig. 2 zu entnehmen. In der einen Schnitt I-I der Fig. 1 darstellenden Fig. 2 ist ferner verdeutlicht, dass sich die Wippkanten 5, 9 und 13 der Wippen 4, 6 und 8, 10 und 11, 14 nur im mittleren Teil der Wippen befinden, da diese an ihren Enden etwas nach oben und nach aussen gewölbt sind. Im Bereich der gewölbten Enden 41 und 42 der dargestellten Wippe 4, 6 liegt die Wippe 4, 6 nicht mit ihrer Wippkante 5 an der Gehäusehälfte 17 an.

Das in Fig. 2 dargestellte Sitzventil 33, 34 ist entsprechend dem Betriebszustand des in Fig. 1 dargestellten Wegeventils geöffnet. Der Ventilkörper 33, der von einem stegförmigen Vorsprung der Membran 18 gebildet ist, besitzt an seinen äusseren Enden 38 und 39 eine grössere Höhe bzw. Dicke als auf seinem mittleren Teil. Mit seinen Enden 38 und 39 stösst der Ventilkörper 33 an Ränder 43 und 40 der Membran 18 an. Die Ränder 43 und 40 der Membran 18 und damit der Ventilkörper 33 sind abgedichtet zwischen den Gehäusehälften 17 und 20 eingespannt, also entsprechend den senkrecht dazu verlaufenden Rändern 19 und 37 der rechteckförmigen Membran 18 (vergl. hierzu Fig. 4). Der Ventilkörper 33 kann zur Verbesserung der Dichtwirkung eine besondere Dichtkante aufweisen und/oder statt des geradlinigen Verlaufes etwas in Längsrichtung gebogen oder gewellt sein, um Längenänderungen ausgleichen zu können.

Da die Ränder 43 und 40 der Membran 18 Teile des Ventilkörpers 33 darstellen, liegt dieser an den Rändern des von dem Ventilkörper 33 und dem zugeordneten Ventilsitz 32 gebildeten Spaltes 44 ständig dichtend am Ventilsitz 34 an. Der Spalt 44 liegt somit sinngemäss in der Ebene der Trennwand zwischen den Kammern 32 und 36. Der Spalt 44 weist also gewissermassen die Kontur eines menschlichen Mundes auf, wobei entsprechend die Enden 38 und 39 des Ventilkörpers 33 ständig dichtend am Ventilsitz 34 anliegen und die Enden des Spaltes 44 in einem spitzen Winkel auslaufen.

Um den Spalt 44 und damit das Sitzventil 33, 34 zu schliessen, ist es erforderlich, den Ventilkörper 33, 38, 39 nach unten auf den Ventilsitz 34 zu drücken. Zu diesem Zweck kann der Kolben 3 über die Bohrung 1 mit Druckluft beaufschlagt werden und nach unten bewegt werden. Dies bedeutet dann, dass die Wippe 4, 6 um die in der Zeichenebene in Fig. 2 liegende Wippkante 5 gekippt wird und sich mit ihrer entsprechenden Hälfte nach und nach vollständig, d.h. auch mit ihren Enden 41 und 42 an die Membran 18 und damit an den Ventilkörper 39, 33, 38 anlegt und diesen gegen den Ventilsitz 34 drückt.

In der einen Schnitt II-II in Fig. 1 darstellenden Fig. 3 ist ein entsprechend geschlossenes Sitzventil 23, 24 dargestellt. Bei diesem Sitzventil 23, 24 liegt die zugeordnete Hälfte 14 der Wippe 11, 14 ganz an dem Ventilkörper 23 an und drückt diesen auch mit seinen Enden 45 und 50 gegen den Ventilsitz 24. Durch die angebogenen Enden 46 und 48 der Wippe 11, 14 wird also erreicht, dass die Enden 45 und 50 des Ventilkörpers 23 praktisch mit der gleichen Kraft gegen den Ventilsitz 24 gedrückt werden, wie der mittlere Teil des Ventilkörpers 23. Die hierzu erforderliche Kraft wird von den Stösseln 15 aufgebracht. Die Stössel 15 befinden sich in Ausnehmungen der oberen Gehäusehälfte 17, die über Bohrungen 47 entlüftet sind. Die Stössel 7 und 15 können z.B. auch als pneumatisch gesteuerte Kolben ausgebildet sein.

Die Fig. 4 zeigt einen Schnitt III-III gemäss Fig. 1, während Fig. 5 einen parallel dazu verlaufenden Schnitt durch die Ebene IV in Fig. 1 zeigt. Beide Figuren 4 und 5 dienen zur Veranschaulichung der Lage und Ausbildung der Membran 18, der Kolben 3 und 12 sowie der Stössel 7 und 15.

Es ist also erkennbar, dass die beschriebene Anordnung bei einem Mehrwegeventil eine platzsparende Konstruktion erlaubt, weil die zu verbindenden Druckmittelkammern unmittelbar nebeneinander angeordnet sein können und das mit den in der Ebene der Trennwände liegenden Sitzventilen gesteuerte Druckmittel nur an wenigen Stellen umgelenkt werden muss. Die langgestreckten Ventilspalte endlicher Länge benötigen weniger Platz als herkömmliche ringförmige Sitzventile.

## Patentansprüche

1. Ventileinrichtung mit einem Ventil, das von einem Ventilkörper und einem Ventilsitz gebildet ist und zur Steuerung eines Druckmittels dient, mit folgenden Merkmalen:

a) der Ventilkörper und der Ventilsitz bilden einen Spalt mit veränderbarem Öffnungsquerschnitt, der zwischen zwei Druckmittelkammern angeordnet ist;

b) der Ventilkörper besteht aus einem flexiblen Werkstoff und ist nach Art einer Membran ausgebildet;

c) es sind Betätigungsmittel zum Anlegen des Ventilkörpers an den Ventilsitz vorgesehen;
gekennzeichnet durch folgende Merkmale:

d) der Ventilsitz (34) wird von einer langgestreckten, insbesondere geradlinig verlaufenden Anlagefläche für den Ventilkörper (33) gebildet, wobei die Anlagefläche von zwei Endbereichen begrenzt ist;

e) der Ventilkörper (33) liegt an den Enden des Spaltes (44) ständig abgedichtet an dem Ventilsitz (34) an;

f) der Ventilkörper (33) und der Ventilsitz (34) sind so ausgebildet, dass der Spalt (44) im geöffneten Zustand des Ventils an seinen Enden in einem spitzen Winkel ausläuft.

2. Einrichtung nach Anspruch 1, dadurch gekennzeichnet, dass der Spalt (44) in der Ebene einer Trennwand zwischen den Druckmittelkammern liegt.

3. Einrichtung nach Anspruch 1 und 2, dadurch gekennzeichnet, dass der Ventilkörper (33) aus Gummi oder dergleichen besteht.

4. Einrichtung nach wenigstens einem der vorhergehenden Ansprüche, dadurch gekennzeichnet, dass der Ventilkörper (33) langgestreckt ist und an seinen Enden (38, 39, 40, 43) abgedichtet zwischen Gehäuseteilen (17, 20) eingespannt ist.

5. Einrichtung nach wenigstens einem der vorhergehenden Ansprüche, gekennzeichnet durch die folgenden Merkmale:

a) der Ventilsitz (34) ist so ausgebildet, dass die von ihm gebildete Kontur des Spaltes (44) im Öffnungsquerschnitt geradlinig verläuft;

b) der Ventilkörper (33) ist so ausgebildet, dass seine Dicke im Bereich des Öffnungsquerschnittes des Spaltes (44) zu den Enden des Spaltes (44) hin zunimmt.

6. Einrichtung nach wenigstens einem der vorhergehenden Ansprüche, gekennzeichnet durch folgende Merkmale:

a) die Betätigungsmittel sind so ausgebildet, dass der Ventilkörper (33) von einem insbesondere plattenförmigen Antriebsteil (11, 14) bewegbar ist;

b) das Antriebsteil (11, 14) ist so ausgebildet, dass es bei geschlossenem Ventil in dem ganzen oder in annähernd dem ganzen Bereich des Ventilkörpers (33) an dem Ventilkörper (33) anliegt, der gegenüber dem Ventilsitz (34) bewegbar ist.

7. Einrichtung nach wenigstens einem der vorhergehenden Ansprüche, dadurch gekennzeichnet, dass das Antriebsteil (4) starr ausgebildet ist und so geformt ist, dass es in den Endbereichen des Spaltes (44) bei geöffnetem Ventil nicht am Ventilkörper (33) anliegt und sich erst beim Schliessen des Ventils (33, 34) zunehmend an dem Ventilkörper (33) anlegt.

8. Einrichtung nach wenigstens einem der vorhergehenden Ansprüche, dadurch gekennzeichnet, dass der Ventilkörper eine an den Ventilsitz dichtend anlegbare Dichtkante aufweist.

9. Einrichtung nach wenigstens einem der vorhergehenden Ansprüche, gekennzeichnet durch folgende Merkmale:

a) zum Betätigen des Ventilkörpers (33) ist ein nach Art einer Wippe ausgebildetes Antriebsteil (4, 6) vorgesehen;

b) die als Wippkante (5) dienende Auflagefläche des Antriebsteils (4, 6) erstreckt sich parallel oder annähernd parallel zum Verlauf des Ventilsitzes (34);

c) das Antriebsteil (4, 6) ist so angeordnet, dass sich die Wippkante (5) des Antriebsteils (4, 6) auf der dem Ventilkörper (33) abgewandten Seite des Antriebsteils (4, 6) an einem Gegenlager (17) abstützt;

d) das Antriebsteil (4, 6) ist so angeordnet, dass es mit wenigstens einem seiner Endbereiche innerhalb des dem Ventilsitz (34) zugeordneten Bereiches des Ventilkörpers (33) an diesem anlegbar ist;

e) zum Antrieb des Antriebsteils (4, 6) umfassen die Betätigungsmittel einen Betätigungsstössel (7).

10. Einrichtung nach Anspruch 9, dadurch gekennzeichnet, dass das Gegenlager gehäusefest angeordnet ist.

11. Einrichtung nach Anspruch 9 oder 10, dadurch gekennzeichnet, dass der Betätigungsstössel von einem druckmittelbetätigten Kolben (3) oder einem von einem solchen Kolben betätigten Stössel gebildet ist.

12. Einrichtung nach wenigstens einem der vorhergehenden Ansprüche für ein Wegeventil mit mehr als zwei Wegen, gekennzeichnet durch folgende Merkmale:

a) die den Ventilwegen zugeordneten Druckmittelkammern (32, 36) sind so nebeneinander angeordnet, dass zwischen je zwei Druckmittelkammern (32, 36) ein Spalt mit veränderbarem Öffnungsquerschnitt angeordnet ist;

b) die Ventilkörper sind von Membranen (18) gebildet, die wenigstens je eine Druckmittelkammer überdecken.

13. Einrichtung nach Anspruch 12, dadurch gekennzeichnet, dass die Ventilkörper (23, 26, 30, 33) mehrerer Ventile von einer durchgehenden Membran (18) gebildet sind.

14. Einrichtung nach Anspruch 12 oder 13 und wenigstens einem der übrigen Ansprüche, dadurch gekennzeichnet, dass bei einer zwischen zwei Druckmittelkammern (29, 36) angeordneten Druckmittelkammer (32) das betreffende Antriebsteil (4, 6) die Druckmittelkammer (32) überdeckt und mit seinen beiden Endbereichen je ein Ventil (33, 34 und 30, 31) betätigt.

15. Einrichtung nach wenigstens einem der Ansprüche 9 bis 14, dadurch gekennzeichnet, dass für jeden Endbereich des Antriebsteils wenigstens ein Betätigungsstössel vorgesehen ist.

**Claims**

1. Valve arrangement with a valve that is formed by a valve member and a valve seat and serves to control a pressure medium, having the following features:

a) the valve member and the valve seat form an opening of adjustable cross-section which is arranged between two pressure-medium chambers;

b) the valve member is made of a flexible material and is formed as a diaphragm;

c) actuating means for laying the valve member on the valve seat are provided;

characterised by the following features:

d) the valve seat (34) is formed by an elongate, especially a rectilinearly extending, support surface for the valve member (33), the support surface being limited by two end regions;

e) the valve member (33) rests on the valve seat (34) in such a manner that it is constantly sealed at the ends of the opening (44);

f) the valve member (33) and the valve seat (34) are so designed that the ends of the opening (44) finish in a sharp angle when the valve is open.

2. Arrangement according to claim 1, characterised in that the opening (44) is in the plane of a separating wall between the pressure-medium chambers.

3. Arrangement according to claims 1 and 2, characterised in that the valve member (33) is made of rubber or the like.

4. Arrangement according to at least one of the preceding claims, characterised in that the valve member (33) is elongate and is clamped between two parts (17, 20) of the housing in such a manner that it is sealed at its ends (38, 39, 40, 43).

5. Arrangement according to at least one of the preceding claims, characterised by the following features:

a) the valve seat (34) is designed in such a manner that that outline of the opening (44) that it forms extends in a straight line across the opening;

b) the valve member (33) is so designed that its thickness increases across the opening (44) in the direction towards the ends of the opening (44).

6. Arrangement according to at least one of the preceding claims, characterised by the following features:

a) the actuating means are so designed that the valve member (33) can be moved by a drive member (11, 14), especially a plate-like drive member;

b) the drive member (11, 14) is so designed that when the valve is closed the drive member rests against the valve member (33) over the whole or virtually the whole area of the valve member (33), which is movable with respect to the valve seat (34).

7. Arrangement according to at least one of the preceding claims, characterised in that the drive member (4) is of rigid construction and is shaped in such a manner that it does not press against the valve member (33) at the end regions of the opening (44) when the valve is open and only progressively comes to press on the valve member (33) as the valve (33, 34) is closed.

8. Arrangement according to at least one of the preceding claims, characterised in that the valve member has a sealing edge that can be laid against the valve seat in such a manner that it forms a seal.

9. Arrangement according to at least one of the preceding claims, characterised by the following features:

a) for the purpose of activating the valve member (33) a drive part (4, 6) designed in the manner of a rocker is provided;

b) the support surface of the drive part (4, 6) acting as the rocker fulcrum (5) extends parallel or approximately parallel to the line of the valve seat (34);

c) the drive part (4, 6) is arranged in such a manner that the rocker fulcrum (5) of the drive part (4, 6) is supported on the side of the drive part (4, 6) remote from the valve member (33) on a bearing surface (17);

d) the drive part (4, 6) is arranged in such a manner that at least one of its end regions can be laid against the valve member (33) within that region of the valve member (33) that is associated with the valve seat (34); and

e) for the purpose of driving the drive part (4, 6) the actuating means include an actuating tappet (7).

10. Arrangement according to claim 9, characterised in that the bearing surface is arranged in such a manner that it is fixed to the housing.

11. Arrangement according to claim 9 or 10, characterised in that the actuating tappet is formed by a pressure-medium actuated piston (3) or a tappet actuated by such a piston.

12. Arrangement according to at least one of the preceding claims for a directional control valve having more than two paths, characterised by the following features:

a) the pressure-medium chambers (32, 36) associated with the valve paths are arranged adjacent one another in such a manner that an opening of adjustable cross-section is arranged between two pressure-medium chambers (32, 36) in each case;

b) the valve members are formed by diaphragms (18), each of which covers at least one pressure-medium chamber.

13. Arrangement according to claim 12, characterised in that the valve members (23, 26, 30, 33) of several valves are formed by a continuous diaphragm (18).

14. Arrangement according to claim 12 or 13 and at least one of the remaining claims, characterised in that in the case of a pressure-medium chamber (32) arranged between two pressure-medium chambers (29, 36) the relevant drive part (4, 6) covers the pressure-medium chamber (32) and each of its two end regions actuates a valve (33, 34 and 30, 31).

15. Arrangement according to at least one of claims 9 to 14, characterised in that at least one actuating tappet is provided for each end region of the drive part.

**Revendications**

1. Dispositif de robinet à soupape comportant un robinet à soupape constitué d'une soupape et d'un siège à soupape et servant à réguler un fluide sous pression, comportant les caractéristiques suivantes:

a) la soupape et le siège de soupape forment une fente, de section d'ouverture variable, disposée entre deux chambres du fluide sous pression;

b) la soupape est constituée d'un matériau souple et elle est conçue à la façon d'une membrane;

c) on a prévu des moyens de manœuvre pour appliquer la soupape sur le siège de soupape, caractérisé par les caractéristiques suivantes:

d) le siège de soupape (34) est formé, pour la soupape (33), par une surface d'appui d'extension longitudinale, et en particulier d'allure rectiligne, étant précisé que la surface d'appui est limitée par deux zones d'extrémité;

e) aux extrémités de la fente (44), la soupape (33) s'applique, de façon permanente et étanche, contre le siège de soupape (44);

f) la soupape (33) et le siège de soupape (34) sont conçus de façon qu'à l'état ouvert du robinet à soupape, la fente (44) se termine, à ses extrémités, sous un angle aigu.

2. Dispositif selon la revendication 1, caractérisé en ce que la fente (44) se trouve dans le plan d'une paroi de séparation entre les chambres du fluide sous pression.

3. Dispositif selon les revendications 1 et 2, caractérisé en ce que la soupape (33) est en caoutchouc ou analogues.

4. Dispositif selon au moins l'une des revendications précédentes, caractérisé en ce que la soupape (33) s'étend longitudinalement et en ce qu'à ses extrémités (38, 39, 40, 43) elle est bridée, avec étanchéité, entre les parties du carter (17, 20).

5. Dispositif selon au moins l'une des revendications précédentes, caractérisé par les caractéristiques suivantes:

a) le siège de soupape (34) est conçu de façon que le contour de la fente (44) formé par lui ait une allure rectiligne dans la section d'ouverture;

b) la soupape (33) est conçue de façon que son épaisseur aille en croissant en direction des extrémités de la fente (44) dans la zone de la section d'ouverture de la fente (44).

6. Dispositif selon au moins l'une des revendications précédentes, caractérisé par les caractéristiques suivantes:

a) les moyens de manœuvre sont conçus de façon que la soupape (33) puisse être déplacée par une pièce d'entraînement (11, 14), en particulier en forme de plaque;

b) la pièce d'entraînement (11, 14) est conçue de façon que, la soupape étant fermée, elle vienne s'appliquer, dans toute la zone, ou approximativement toute la zone, de la soupape (33), contre la soupape (33), qui peut se déplacer par rapport au siège de soupape (34).

7. Dispositif selon au moins l'une des revendications précédentes, caractérisé en ce que la pièce d'entraînement (4) est conçue rigide et formée à ne pas s'appliquer contre la soupape (33) dans les zones d'extrémité de la fente (44), la soupape étant ouverte, et à ne s'appliquer de façon croissante contre la soupape (33) que lors de la fermeture de la soupape (33, 34).

8. Dispositif selon au moins l'une des revendications précédentes, caractérisé en ce que la soupape présente une arête d'étanchéité qui peut s'appliquer de façon étanche contre le siège de soupape.

9. Dispositif selon au moins l'une des revendications précédentes, caractérisé par les caractéristiques suivantes :

a) pour manœuvrer la soupape (33) il est prévu une pièce d'entraînement (4, 6) conçue à la façon d'une bascule ;

b) la surface d'appui, qui sert d'arête de basculement (5), de la pièce d'entraînement (4, 6) s'étend parallèlement ou à peu près parallèlement à la courbe du siège de soupape (34) ;

c) la pièce d'entraînement (4, 6) est disposée de façon que l'arête de basculement (5) de la pièce d'entraînement (4, 6) s'appuie contre un contre-appui (17) du côté de la pièce d'entraînement (4, 6) opposé à la soupape (33) ;

d) la pièce d'entraînement (4, 6) est disposée de façon à s'appliquer contre la soupape par au moins l'une de ses zones d'extrémité à l'intérieur de la zone de la soupape (33) correspondant au siège de soupape (34) ;

e) pour entraîner la pièce d'entraînement (4, 6), les moyens de manœuvre viennent enserrer un poussoir de manœuvre (7).

10. Dispositif selon la revendication 9, caractérisé en ce que le contre-appui est disposé fixe par rapport au carter.

11. Dispositif selon la revendication 9 ou 10, caractérisé en ce que le poussoir de manœuvre est constitué d'un piston (3) manœuvré par le fluide sous pression ou d'un poussoir manœuvré par un tel piston.

12. Dispositif selon au moins l'une des revendications précédentes, pour un robinet distributeur à plus de deux voies, caractérisé par les caractéristiques suivantes :

a) les chambres du fluide sous pression (32, 36) correspondant aux voies du robinet distributeur sont disposées l'une à côté de l'autre de façon telle qu'entre respectivement deux chambres du fluide sous pression (32, 36) soit disposée une fente de section d'ouverture variable ;

b) les soupapes sont constituées par des membranes (18) qui recouvrent au moins respectivement une chambre du fluide sous pression.

13. Dispositif selon la revendication 12, caractérisé en ce que les soupapes (23, 26, 30, 33) de plusieurs robinets à soupape sont constituées par une membrane continue (18).

14. Dispositif selon la revendication 12 ou 13, et selon au moins l'une des autres revendications, caractérisé en ce que, dans le cas d'une chambre du fluide sous pression (32) disposée entre deux chambres du fluide sous pression (29, 36), la pièce de manœuvre en question (4, 6) recouvre la chambre du fluide sous pression (32) et, par ses deux zones d'extrémité, actionne respectivement une soupape (33, 34 et 30, 31).

15. Dispositif selon au moins l'une des revendications 9 à 14, caractérisé en ce qu'il est prévu au moins un poussoir de manœuvre pour chaque zone d'extrémité de la pièce d'entraînement.

Fig.1

1 2 3 4 5 6 7 8 9 10 11 12 13 14 15 16 17 18 19 20 21 22 23 24 25 26 27 28 29 30 31 32 33 34 35 36 37

I II III IV

0 152 526

Fig.2

Fig.3

0 152 526

Fig.4

Fig. 5